(19) Europäisches Patentamt
European Patent Office
Office européen des brevets

(11) **EP 1 529 942 B1**

(12) **EUROPEAN PATENT SPECIFICATION**

(45) Date of publication and mention
of the grant of the patent:
**04.03.2015 Bulletin 2015/10**

(51) Int Cl.:
***F02D 41/02*** *(2006.01)*   ***F02D 41/18*** *(2006.01)*
***F02D 35/00*** *(2006.01)*

(21) Application number: **04026079.6**

(22) Date of filing: **03.11.2004**

(54) **Attenuation of engine harshness during lean-to-rich transitions**

Verminderung der Motorrauhheit während Mager-Fett-Übergängen

Atténuation de dureté au choc d'un moteur à combustion interne pendant des transitions d'un mélange pauvre à riche

(84) Designated Contracting States:
**DE FR GB IT SE**

(30) Priority: **06.11.2003 US 702889**

(43) Date of publication of application:
**11.05.2005 Bulletin 2005/19**

(73) Proprietor: **International Engine Intellectual Property Company, LLC.
Warrenville, IL 60555 (US)**

(72) Inventors:
• **Zhang, Guoqing
Lisle, IL 60532 (US)**
• **O'Connor, Justin M.
Batavia, IL 60510 (US)**
• **Miller, Michael J.
Mount Prospect, IL 60056 (US)**

• **Gui, Xinqun
Naperville, IL 60540 (US)**

(74) Representative: **Kuhnen & Wacker
Patent- und Rechtsanwaltsbüro
Prinz-Ludwig-Straße 40A
85354 Freising (DE)**

(56) References cited:
**DE-C1- 10 026 806     JP-A- 11 351 020
JP-A- 63 105 256     JP-A- 2000 027 710
US-A1- 2002 189 580     US-A1- 2003 110 760**

• **EASTOP AND MCCONKEY: "Applied Thermodynamics for Engineering Technologists 5th Edition" 1997, ADDISON WESLEY LONGMAN LIMITIED , ENGLAND , XP002404236 * page 441; figure 13.18 ***

## Description

### Field of the Invention

This invention relates to motor vehicles that are powered by internal combustion engines whose operation may for any of various reasons temporarily transition from running lean, i.e. a lean fueling mode, to running rich, i.e. a rich fueling mode, one reason being to purge a NOx adsorber in the engine exhaust system of adsorbed NOx so that it can continue to be effective as the engine continues running. More particularly, the invention relates to systems and methods for attenuating fluctuations in engine output torque that contribute to harness in the operation of such vehicles during lean-rich transitions such as those for regenerating a NOx adsorber.

### Background of the Invention

An exhaust system of a diesel engine that comprises a NOx adsorber is capable of adsorbing significant amounts of NOx in exhaust gas passing through the exhaust system from the engine, thereby reducing the amount of NOx that otherwise would enter the atmosphere. From time to time, such a device must be regenerated in order to purge it of adsorbed NOx so that it can continue to be effective in adsorbing NOx as the engine continues to run. A known technique for regenerating a NOx adsorber comprises creating an excess of CO for reaction with adsorbed NOx to reduce the NOx to molecular nitrogen ($N_2$) while the CO oxidizes to $CO_2$ during the process.

One known method for creating excess CO comprises injecting fuel in proper amount into the exhaust leaving engine combustion chambers. Because that fuel does not contribute to the thermal energy of combustion that is converted by thermodynamic processes in the combustion chambers acting on the engine's kinematic mechanism to create engine torque, it has essentially no influence on engine torque.

For one or more reasons, post-injection of fuel that does contribute to the thermal energy of combustion that produces engine torque may be considered a more desirable alternative, although both methods require the injection of extra fuel to purge the NOx adsorber. However, the post-injection alternative has consequences on engine torque output that can lead to undesirable torque fluctuations that contribute to engine and vehicle harshness as the engine continues to run during NOx adsorber regeneration.

A known electronic engine control system comprises a processor-based engine controller that processes data from various sources to develop control data for controlling certain functions of the engine. The amount and the timing of engine fueling are two functions that are controlled by an engine control system. A typical diesel engine that comprises fuel injectors for injecting fuel into the engine cylinders under control of an engine control system controls both the duration and the timing of each fuel injection to set both the amount and the timing of engine fueling. During an engine cycle, it is also capable of pre-injection of fuel (pilot-injection) in advance of a main injection and post-injection after the main injection, although the use of either typically depends on how the engine is being operated.

The DE 100 26 806 discloses a method for switching between a lean burn mode with a super-stoichiometric combustion air ratio of greater than 1 and a rich burn mode with a sub-stoichiometric air ratio of less than 1 by determining the engine torque fluctuations during the changeover and holding the engine torque constant during the changeover by adjusting parameters influencing the torque.

The JP 2000-027710 discloses a method to mitigate impact due to torque fluctuations in switching from lean to rich or from rich to lean by gradually changing only air quantity and changing an excess air ratio by providing an air supply means supplying a required amount of air between a mixer and an engine. An internal combustion engine is constituted of an engine, a mixer and an air supply pipe connected between the engine and the mixer. The air supply pipe is provided with a throttle valve and a valve on the half way. The valve is controlled to either one of a full open or a full close by a solenoid. Fuel gas amount supplied from a fuel gas supply pipe is kept constant and an access air ratio of mixed air supplied to the engine is adjusted by air quantity supplied from the air supply pipe. As a result, impact due to torque fluctuation and switching from lean to rich or from rich to lean can be mitigated by gradually changing only air quantity and changing the excess air ratio.

The JP 11-351020 discloses a method to suppress torque shocks during a changeover to a lean air fuel ratio by optimizing the adaptation of the air fuel ratio to engine output torque. A throttle opening criterion is selected by interpolation by a throttle-opening criterion table employing engine speed as parameter. A determination is then made whether a throttle opening angle, even with a hysteresis as the case may be, is less than the throttleopening criterion. If this proposition is acceptable, a throttle opening determination flag is set to 1 to change the air fuel ratio from a stoichiometric or rich level to a lean air fuel ratio in the range, wherein the generated engine torque is held substantially constant, with the result that no torque shocks are produced.

The JP 63-105256 discloses a basic fuel injection quantity setting means calculating a basic fuel injection quantity on the basis of rotary speeds from an ignition coil and an air flow meter. An air fuel ratio feedback correction coefficient setting means sets a feedback correction coefficient on the basis of a detection value from an air fuel ratio detecting means, which detects air fuel ratio over a wide range from the lean to the rich, and an integration constant from an integration constant setting means which decreases the integration constant to a small value when target air fuel ratio is in a lean side. A fuel injection quantity setting means sets a fuel injection amount on the basis of the basic fuel injection quantity, feedback correction coefficient, water temperature correction coefficient, etc.

The US 2003/0110760 A1 discloses a method for controlling an excess air factor of a diesel engine while preventing the change in the engine output torque. A diesel engine provided with a $NO_x$ catalyst and a diesel particulate filter performs a lean burn operation during normal running, rich burn operation during regeneration of the $NO_X$ catalysts, operation under the stoichiometric air-fuel ratio desulphating of the $NO_X$ catalyst, and operation under a slightly lean air-fuel ratio to regenerate the filter after desulphating of the $NO_X$ catalysts. When the lean burn operation is applied, a controller first controls the fuel injection amount and controls an air supply amount based on the fuel injection amount. When rich burn operation is applied, the controller first controls the supply amount and controls the fuel injection amount based on the air supply amount. Due to this control, the response of the excess air factor control is enhanced while preventing torque fluctuation accompanying the variation of the target excess air factor.

The US 2002/0189580 A1 discloses an exhaust treatment system for an internal combustion engine including a catalytic emission control device. When transitioning the engine between a lean operation condition and a stoichiometric operation condition, as when scheduling a purge of the down stream device to thereby release an amount of selected exhaust gas constituent, such as $NO_x$, that has been stored in the downstream device during the lean operation condition, the air-fuel ratio of the air-fuel mixture supplied to each cylinder is sequentially stepped from an air-fuel ratio of at least about 18 through the stoichiometric air fuel ratio. The purge event is preferably commenced when all but one cylinders has been stepped to stoichiometric operation, with the air-fuel mixture supplied to the last cylinder being stepped immediately to an air-fuel ratio rich of a stoichiometric air-fuel ratio.

### Summary of the Invention

It is an object of the present invention to provide a method for avoiding fluctuations in engine output torque during a transition from a lean to a rich fueling mode.

In order to achieve the above mentioned object, a first generic aspect of the present invention provides a method for control of output torque developed by an internal combustion engine during the transition from a lean to a rich fueling mode of engine operation, wherein the method comprises: a) with the engine running in a lean fueling mode, processing data values of certain parameters to develop a data value for desired engine fueling for causing the engine to develop a corresponding desired output torque at a given engine speed; b) causing the engine to transit from the lean fueling mode to the rich fueling mode while maintaining engine output torque at the corresponding desired output torque at the given engine speed, characterized by the following steps: processing i) the data value for desired engine fueling resulting from the processing of step a), ii) a data value for engine speed, and iii) a data value for actual air-fuel ratio at which the engine is operating, to thereby develop a data value for desired engine fueling that causes the engine to run in the rich fueling mode while maintaining engine output torque at the corresponding desired output torque at the given engine speed when the engine was running in the lean fueling mode. Further, step a) comprises: with the engine running in the lean fueling mode, processing data values of engine speed and accelerator pedal position to develop a data value for desired engine fueling for causing the engine to develop a corresponding desired output torque at a given engine speed, and in which step b) comprises: with the engine running in the rich fueling mode, processing a data value for actual air-fuel ratio through a linear function that correlates data values of air-fuel ratio to data values of engine fueling for causing the engine to run in the rich fueling mode while maintaining engine output torque at the corresponding desired output torque at the given engine speed when the engine was running in the lean fueling mode, and causing the data value of desired engine fueling to be the data value of engine fueling correlated by the linear function to the data value of actual air-fuel ratio.

A second generic aspect of the present invention relates to the method according to the first aspect, wherein the processing of the data value for actual air-fuel ratio through a linear function that correlates data values of air-fuel ratio to data values of engine fueling in step b) is performed according to the linear function

$$\text{VF\_des\_m} = \alpha \text{VF\_des\_m\_c} + (1-\alpha)\text{VF\_des\_m\_r}$$

for a first air-fuel ratio intervall and according to the linear function

$$\text{VF\_des\_m} = \beta \text{VF\_des\_m\_l} + (1-\beta)\text{VF\_des\_m\_c}$$

for a second air-fuel ratio intervall, wherein the values for the air-fuel ratio in the first air-fuel ratio interval are smallet than the values for the air-fuel ratio in the second air-fuel ratio interval and wherein

VF_des_m = desired main engine fueling, VF_des_m_r = desired engine fueling when AFR=AFR_r, VF_des_m_c = desired engine fueling when AFR=AFR_c, VF_des_m_l = desired engine fueling when AFR=AFR_1 and $\alpha$=(AFR-AFR_r)/(AFR_c-AFR_r) and $\beta$=(AFR-AFR_c)/(AFR_1-AFR_c) and AFR = air-fuel ratio, AFR_r = rich air-fuel ratio, AFR_1 = lean air-fuel ratio, AFR_c = air-fuel ratio at lean /rich transition.

A third generic aspect of the present invention relates to an internal combustion engine for carrying out the method according to any one of the first or second aspects.

The foregoing, along with further features and advantages of the invention, will be seen in the following disclosure of a presently preferred embodiment of the invention depicting the best mode contemplated at this time for carrying out the invention. This specification includes drawings, now briefly described as follows.

**Brief Description of the Drawings**

Figure 1 is a general schematic diagram of portions of a diesel engine relevant to the present invention.

Figure 2 is a schematic diagram of a portion of control strategy for the engine.

Figure 3 is a graph plot showing time traces of several parameters relevant to engine operation.

Figure 4 is a first graph plot useful in understanding principles of the invention.

Figure 5 is a second graph plot useful in understanding principles of the invention.

Figure 6 is a schematic diagram of another portion of the engine control strategy.

Figure 7 is a schematic diagram of another portion of the engine control strategy.

Figure 8 is a third graph plot useful in understanding principles of the invention.

Figure 9 is a fourth graph plot useful in understanding principles of the invention.

**Description of the Preferred Embodiment**

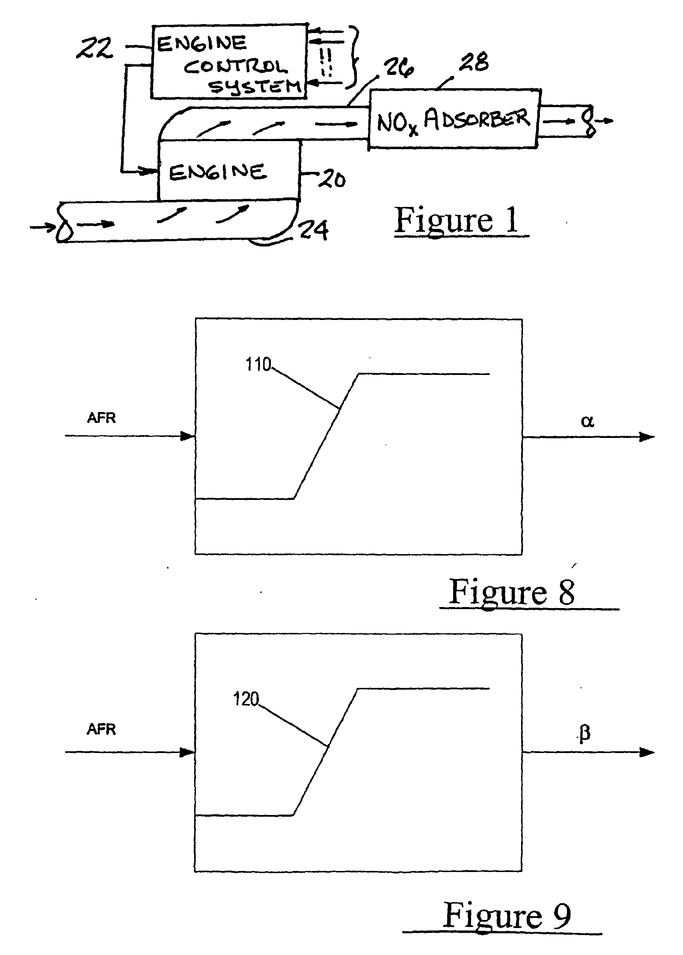

Figure 1 shows a schematic diagram of an exemplary diesel engine 20 for powering a motor vehicle. Engine 20 has a processor-based engine control system 22 that processes data from various sources to develop various control data for controlling various aspects of engine operation. The data processed by control system 22 may originate at external sources, such as sensors, and/or be generated internally.

Control system 22 controls the operation of electric-actuated fuel injectors that inject fuel into engine combustion chambers. A processor of control system 22 can process data sufficiently fast to calculate, in real time, the timing and duration of injector actuation to set both the timing and the amount of fueling. The injection process comprises a main injection, and under certain conditions, a pilot injection and/or a post-injection. Control system 22 calculates a data value VF_des_m that represents the amount of fuel that is to be injected into a combustion chamber during an engine cycle.

Engine 20 further comprises an intake system 24 through which charge air enters the combustion chambers, and an exhaust system 26 through which exhaust gases resulting from combustion leave the engine. Exhaust system 26 includes a NOx adsorber 28 that adsorbs significant amounts of NOx in exhaust gas passing from engine 26, thereby reducing the amount of NOx that otherwise would enter the atmosphere.

From time to time, NOx adsorber 28 must be regenerated in order to purge it of adsorbed NOx so that it can remain effective as the engine continues to run. A known technique for regenerating a NOx adsorber comprises creating an excess of CO for reaction with adsorbed NOx to reduce the NOx to molecular nitrogen ($N_2$) while the CO oxidizes to $CO_2$ during the process.

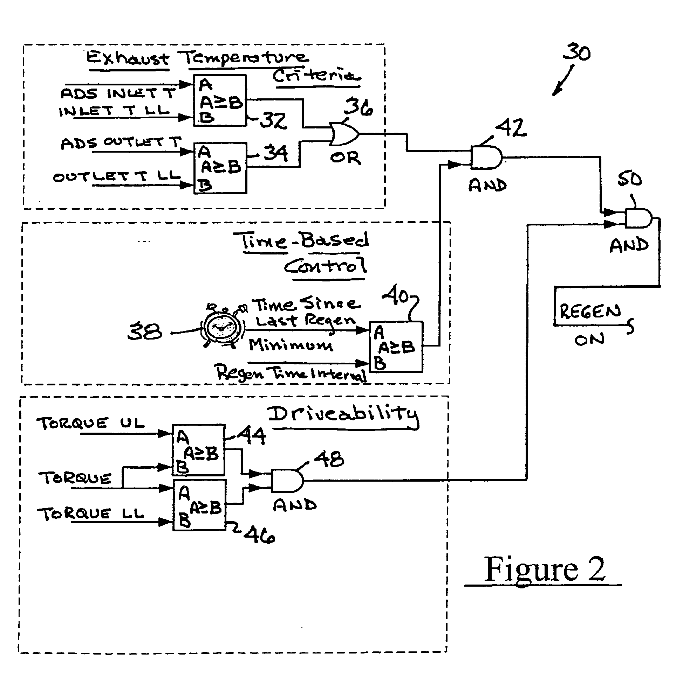

Figure 2 discloses a strategy 30 that is executed by control system 22 to determine when regeneration can be performed. The strategy is premised on the general factors: exhaust gas temperature; elapse of time since the previous regeneration; and driveability of the vehicle.

Temperature of exhaust gas proximate the inlet of NOx adsorber 28, obtained by either estimation or measurement, is represented by the data value for a parameter ADS_INLET_T. Temperature of exhaust gas proximate the outlet of NOx adsorber 28, obtained by either estimation or measurement, is represented by the data value for a parameter ADS_OUTLET_T. The data value for ADS_INLET_T is compared by a comparison function 32 with a data value INLET_T_LL representing a lower temperature limit at or above which it would be appropriate to regenerate NOx adsorber 28. The data value for ADS_OUTLET_T is compared by a comparison function 34 with a data value OUTLET_T_LL representing a lower temperature limit at or above which it would be appropriate to regenerate NOx adsorber 28.

If either comparison function 32, 34 is satisfied by the corresponding actual temperature being equal to or greater than the respective lower limit, then a logical OR function 36 enables regeneration to proceed. Additional conditions must also be satisfied however before regeneration actually proceeds.

Time elapsed since the last regeneration is measured by a timer function 38. The data value for elapsed time is compared by a comparison function 40 with the data value for a minimum interval between regenerations. Once elapsed time equals or exceeds the minimum, regeneration is enabled. An AND logic function 42 assures that both a temperature minimum and a time minimum have been satisfied before regeneration is enabled.

Once strategy 30 has been enabled, actual regeneration becomes a function of driveability. Driveability refers to acceptable vehicle vibration and harshness during lean/rich transition. A torque lower limit and upper limit have been set to minimize vibration and harshness during the transition.

The lower limit requires the engine to be running with some load, while the upper limit keeps the engine away from severe acceleration conditions.

The data value for a parameter TORQUE represents the torque which engine 20 is producing. TORQUE is the estimated torque based on fueling and engine speed, in other words TORQUE=f(VFDES, N). The data value for TORQUE is compared by a comparison function 44 with a data value TORQUE_UL representing an upper torque limit above which regeneration would be inappropriate. The data value for TORQUE is compared by a comparison function 46 with a data value TORQUE_ LL representing a lower torque limit below which regeneration would be inappropriate. An AND logic function 48 processes the results of both comparisons to assure that torque is within the allowable range for NOx adsorber regeneration.

A further AND function 50 processes outputs from both AND functions 42, 48 to allow regeneration when the three general factors of exhaust gas temperature, elapse of time since the previous regeneration, and driveability of the vehicle are satisfied.

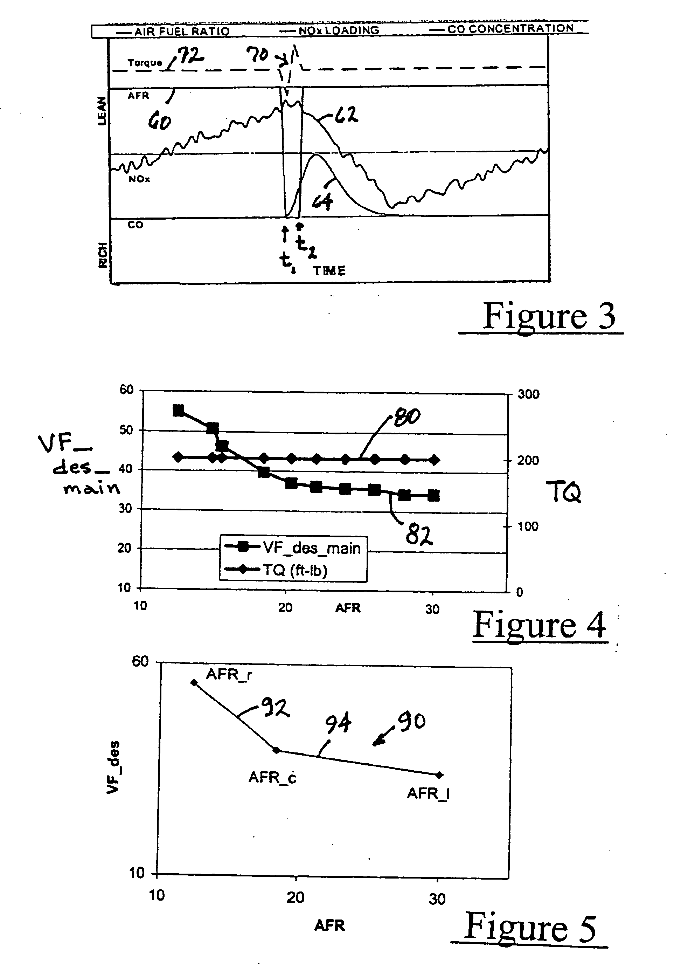

In general, a diesel engine runs cooler, slower, and leaner than a spark-ignition engine. During lean running, engine 20 generates NOx that is adsorbed by NOx adsorber 28. When the adsorber is to be regenerated, engine operation transitions from running lean to running rich in order to condition the exhaust for purging NOx adsorber 28 by generating the needed excess CO. A trace 60 in Figure 3 represents air-fuel ratio. Before time $t_1$ engine 20 is running lean, the NOx loading of NOx adsorber 28, represented by a trace 62, is increasing, and CO concentration, represented by a trace 64, is relatively low.

At time $t_1$ post injection and air management decrease the air-fuel ratio, creating a surge in CO concentration in the process. At time $t_2$ lean running resumes. Trace 62 shows that the surge is effective to purge NOx adsorber 28 of a significant amount of its NOx load.

The conditions portrayed by Figure 3 assume that certain inputs to control system 22, namely engine speed and accelerator pedal position are commanding engine 20 to develop a substantially constant torque. Because the regeneration process alters engine fueling from that which is otherwise being called for by engine speed and accelerator pedal position, engine torque may fluctuate during NOx adsorber regeneration, as represented by a perturbation 70 in a trace of engine torque 72. A significant perturbation can contribute to harshness in engine operation that is consequently introduced into the vehicle drivetrain. It is toward attenuating such harshness that the present invention is directed.

Figure 4 shows a trace 80 of engine torque versus air-fuel ratio where, for a given engine speed, the torque remains substantially constant. A trace 82 shows the corresponding fueling that engine 20 needs in order to develop the torque represented by trace 80.

Principles of the invention resulted from the recognition that data closely approximating trace 82 can be developed by suitable data programming of, and data processing by, control system 22, and the resulting data processed with other data to create desired engine fueling data that, for a given engine speed and desired engine output torque, can fuel the engine during a lean-to-rich transition that causes the engine to run rich while striving to maintain engine output torque at the corresponding desired output torque at the given engine speed when the engine was running lean, thereby attenuating undesired fluctuations in engine torque that would be experienced in the absence of the invention.

Figure 5 shows a piecewise linear approximation 90 of trace 82 to comprise a first linear segment 92 extending between data points marked AFR_r and AFR_c and a second linear segment 94 extending between data points marked AFR_c and AFR_1 . AFR symbolizes air-fuel ratio.

Segment 92 can be defined by the function

$$VF\_des\_m = \alpha VF\_des\_m\_c + (1-\alpha)VF\_des\_m\_r$$

and
segment 94 by the function

$$VF\_des\_m = \beta VF\_des\_m\_l + (1-\beta)VF\_des\_m\_c$$

where

$$\alpha = (AFR - AFR\_r)/(AFR\_c - AFR\_r)$$

and

$$\beta = (AFR - AFR\_c)/(AFR\_l - AFR\_c).$$

These functional relationships define a control algorithm for desired engine fueling over a range of air-fuel ratios that will cause engine 20 to develop substantially constant torque, although it is to be appreciated that the engine may not necessarily operate all such ratios. In order to generate the excess CO needed for NOx adsorber regeneration, engine 20 needs to run at an AFR below stoichiometric (an AFR of approximately 13). Hence for a given torque, a fueling transition from lean to rich that strives to maintain that torque will take place along segment 92. As can be appreciated, the specific parameters for a transition will be governed by a specific regeneration strategy for a particular engine.

Implementation of the control algorithm in control system 22 is accomplished by entering data values for AFR_r, AFR_c, and AFR_1 for each pair of data values for engine torque and engine speed. A sufficient number of pairs of such torque and speed data values are programmed into control system 22 to adequately cover the range of engine operation with sufficient resolution within the range.

For given data values of torque and speed representing current engine torque and current engine speed, control system 22 operates to select from the closest pair of torque and speed data values that have been programmed into it, the corresponding data values for AFR_r, AFR_c, and AFR_1 for use in calculating a data value for VF_des_m. A data value for the variable AFR is obtained in any suitably appropriate way and processed according to the algorithm to develop the data value for VF_des_m. The processing occurs sufficiently fast in real time to allow variables like AFR to be updated fast enough to follow changing engine operation.

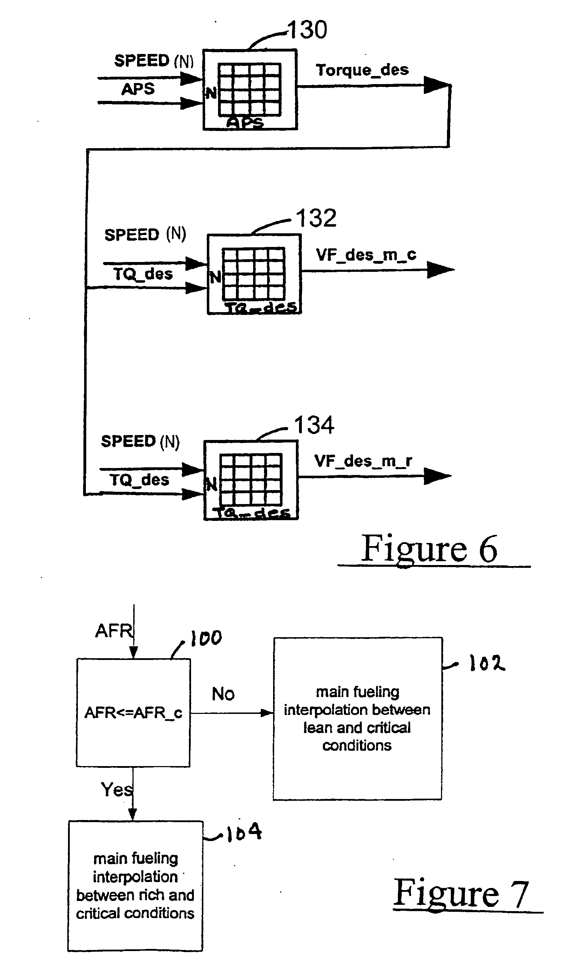

The algorithm develops desired fueling data values in the manner represented by Figure 7. For the selected pair of torque and speed data values, control system 22 determines whether actual AFR is above or below the AFR represented by the corresponding break point AFR_c (step 100 in Figure 7).

If AFR is greater than AFR_c, then desired fueling is controlled by

$$VF\_des\_m = \beta VF\_des\_m\_l + (1-\beta)VF\_des\_m\_c$$

corresponding to step 102 in Figure 7.

If AFR is equal to or less than AFR_c, then desired fueling is controlled by

$$VF\_des\_m = \alpha VF\_des\_m\_c + (1-\alpha)VF\_des\_m\_r$$

corresponding to step 104 in Figure 7.

When the actual AFR is other than AFR_r, AFR_c, and AFR_1, the algorithm calculates the data value for desired engine fueling by what amounts to interpolation, as graphically portrayed by the function 110 in Figure 8 for $\alpha$, and the function 120 in Figure 9 for $\beta$. The implementation in control system 22 is represented by Figure 6. Data values for engine speed (parameter N) and accelerator pedal position (parameter APS) determine, via a map or look-up table 130, a data value for engine output torque (parameter Torque_des). Control system 22 processes Torque_des according to an operating strategy for causing engine 20 to develop that torque at that speed. When NOx adsorber 28 is not being regenerated, it is Torque_des that controls desired engine fueling by a different portion of the strategy that is not shown here. When regeneration is occurring, Torque_des is still a factor in controlling desired engine fueling, but not the sole factor because the control algorithm that is used during regeneration takes AFR into account.

Another look-up table 132 contains data values for VF_des_c correlated with the pair of the data value for engine speed (N) and the data value for Torque_des that would be essentially exclusively controlling desired engine fueling if regeneration were not occurring. Still another look-up table 134 contains data values for VF_des_r correlated with the pair of the data value for engine speed (N) and the data value for Torque_des that would be essentially exclusively controlling desired engine fueling if regeneration were not occurring.

Data values for N and Torque_des determine, via maps 132 and 134, data values for VF_des_m_c (representing desired fueling when AFR=AFR_c) and VF_des_m_r (representing desired fueling when AFR=AFR_r). The control algorithm then utilizes those data values for its calculation. Because data values for N and Torque_des can change during regeneration, the execution rate of the control algorithm is sufficiently fast to follow those changes so that data values for VF_des_m_c and VF_des_m_r can be changed accordingly as called for by the maps.

While a presently preferred embodiment of the invention has been illustrated and described, it should be appreciated that principles of the invention apply to all embodiments falling within the scope of the following claims.

**Claims**

1. A method for control of output torque developed by an internal combustion engine during the transition from a lean to a rich fueling mode of engine operation, the method comprising:

   a) with the engine running in a lean fueling mode, processing data values of certain parameters to develop a data value for desired engine fueling for causing the engine to develop a corresponding desired output torque at a given engine speed;
   b) causing the engine to transit from the lean fueling mode to the rich fueling mode while maintaining engine output torque at the corresponding desired output torque at the given engine speed;

   **characterized by** the following steps:

   processing

   i) the data value for desired engine fueling resulting from the processing of step a),
   ii) a data value for engine speed, and
   iii) a data value for actual air-fuel ratio at which the engine is operating, to thereby develop a data value for desired engine fueling that causes the engine to run in the rich fueling mode while maintaining engine output torque at the corresponding desired output torque at the given engine speed when the engine was running in the lean fueling mode; and

   wherein step a) comprises:

   with the engine running in the lean fueling mode, processing data values of engine speed and accelerator pedal position to develop a data value for desired engine fueling for causing the engine to develop a corresponding desired output torque at a given engine speed, and

   in which step b) comprises:

   with the engine running in the rich fueling mode, processing a data value for actual air-fuel ratio through a function that correlates data values of air-fuel ratio to data values of engine fueling for causing the engine to run in the rich fueling mode while maintaining engine output torque at the corresponding desired output torque at the given engine speed when the engine was running in the lean fueling mode, and causing the data value of desired engine fueling to be the data value of engine fueling correlated by the function to the data value of actual air-fuel ratio.

2. An internal combustion engine for carrying out the method according to any of claims 1, comprising:

a fueling system for fueling the engine (20) in accordance with a data value for desired engine fueling; and
a control system (22) for processing various data to develop data for control of various engine functions including data values for desired engine fueling, wherein
the control system (22) comprises a control strategy;

a) for causing the engine to run in a lean fueling mode, and with the engine running in the lean fueling mode, for processing data values of certain parameters to develop a data value for desired engine fueling for causing the engine (20) to develop a corresponding desired output torque at a given engine speed; and
b) for causing the engine (20) to transition from the lean fueling mode to a rich fueling mode while maintaining engine output torque at the corresponding desired output torque at the given engine speed by processing i) the data value for desired engine fueling resulting from the processing of a), ii) a data value for engine speed, and iii) a data value for actual air-fuel ratio at which the engine (20) is operating, to thereby develop a data value for desired engine fueling that causes the engine (20) to run in the rich fueling mode while maintaining engine output torque at the corresponding desired output torque at the given engine speed when the engine (20) was running in the lean fueling mode.

**Patentansprüche**

1. Verfahren zum Steuern eines Ausgangs-Drehmoments, das von einem Verbrennungsmotor während des Übergangs von einem mageren zu einem fetten Kraftstoff-Motorbetriebsmodus erzeugt wird, wobei das Verfahren aufweist:

a) Während der Motor in einem mageren Kraftstoffmodus läuft, Verarbeiten von Datenwerten mit bestimmten Parametern, um einen Datenwert für den gewünschten Motor-Kraftstoffmodus zu erhalten, damit der Motor ein entsprechendes gewünschtes Ausgangs-Drehmoment bei einer bestimmten Motordrehzahl erzeugt;
b) Veranlassen, dass der Motor von dem mageren Kraftstoffmodus in den fetten Kraftstoffmodus wechselt, während das Motor-Ausgangsdrehmoment bei der bestimmten Motordrehzahl auf dem entsprechenden gewünschten Ausgangsdrehmoment gehalten wird;

**gekennzeichnet durch** die folgenden Schritte:

Verarbeiten

(i) des Datenwerts für den gewünschten Motor-Kraftstoffmodus, der sich aus dem Verarbeiten von Schritt a) ergibt,
(ii) eines Datenwerts für die Motordrehzahl, und
(iii) eines Datenwerts für das tatsächliche Luft/Kraftstoffverhältnis, mit dem der Motor läuft, um **dadurch** einen Datenwert für den gewünschten Kraftstoffmodus zu erhalten, der den Motor dazu bringt, in dem fetten Kraftstoffmodus zu laufen, während das Motor-Ausgangsdrehmoment bei der bestimmten Motordrehzahl auf dem gewünschten Ausgangsdrehmoment gehalten wird, wenn der Motor in dem mageren Kraftstoffmodus läuft; und

wobei Schritt a) aufweist:

während der Motor in dem mageren Kraftstoffmodus läuft, Verarbeiten von Datenwerten der Motordrehzahl und Gaspedalposition, um einen Datenwert für den gewünschten Motor-Kraftstoffmodus zu erhalten, damit der Motor veranlasst wird, ein entsprechendes gewünschtes Ausgangsdrehmoment bei einer bestimmten Motordrehzahl zu entwickeln, und

wobei Schritt b) aufweist:

während der Motor in dem fetten Kraftstoffmodus läuft, Verarbeiten eines Datenwerts für das tatsächliche Luft/Kraftstoffverhältnis **durch** eine Funktion, die Datenwerte für das Luft/Kraftstoffverhältnis mit Datenwerten für den Kraftstoffmodus des Motors korreliert, um den Motor zu veranlassen, in dem fetten Kraftstoffmodus zu laufen, während das Motor-Ausgangsdrehmoment bei der bestimmten Motordrehzahl auf dem entsprechenden gewünschten Ausgangsdrehmoment gehalten wird, wenn der Motor in dem mageren Kraftstoffmodus läuft, und wodurch veranlasst wird, dass der Datenwert des gewünschten Motor-Kraftstoffmodus der Datenwert des Motor-Kraftstoffmodus ist, der **durch** die Funktion auf den Datenwert des tatsächlichen Luft/Kraftstoffverhältnisses korreliert wird.

2. Verbrennungsmotor zum Ausführen des Verfahrens nach Anspruch 1, aufweisend:

ein Kraftstoffzuführsystem zum Zuführen von Kraftstoff an den Motor (20) in Übereinstimmung mit einem Datenwert für die gewünschte Motor-Kraftstoffzufuhr; und

ein Steuersystem (22) zum Verarbeiten verschiedener Daten, um Daten für die Steuerung verschiedener Motorfunktionen einschließlich Datenwerten für die gewünschte Motor-Kraftstoffzufuhr zu erhalten, wobei das Steuersystem (22) eine Steuerstrategie aufweist,

a) um den Motor zu veranlassen, in einem mageren Kraftstoffmodus zu laufen, und wenn der Motor in dem mageren Kraftstoffmodus läuft, um Datenwerte bestimmter Parameter zu verarbeiten, um einen Datenwert für den gewünschten Motor-Kraftstoffmodus zu erhalten, um den Motor (20) zu veranlassen, ein entsprechendes gewünschtes Ausgangsdrehmoment bei einer bestimmten Motordrehzahl zu erzeugen; und

b) um den Motor (20) zu veranlassen, von dem mageren Kraftstoffmodus zu einem fetten Kraftstoffmodus zu wechseln, während das Motor-Ausgangsdrehmoment bei der bestimmten Motordrehzahl auf dem entsprechenden gewünschten Ausgangsdrehmoment gehalten wird, indem (i) der Datenwert für den gewünschten Motor-Kraftstoffmodus, der aus dem Verarbeiten von a) resultiert, (ii) ein Datenwert für die Motordrehzahl, und (iii) ein Datenwert für das tatsächliche Luft/Kraftstoffverhältnis, mit dem der Motor (20) läuft, verarbeitet wird, um dadurch einen Datenwert für den gewünschten Motor-Kraftstoffmodus zu erhalten, der den Motor (20) veranlasst, in dem fetten Kraftstoffmodus zu laufen, während das Motor-Ausgangsdrehmoment bei der bestimmten Motordrehzahl auf dem entsprechenden gewünschten Ausgangsdrehmoment gehalten wird, wenn der Motor (20) in dem mageren Kraftstoffmodus läuft.

## Revendications

1. Procédé de commande du couple de sortie développé par un moteur à combustion interne pendant le passage d'un mode d'alimentation en carburant pauvre à riche de fonctionnement du moteur, le procédé comprenant :

a) alors que le moteur fonctionne dans un mode d'alimentation en carburant pauvre, on traite des valeurs de données de certains paramètres pour obtenir une valeur de données pour une alimentation en carburant souhaitée du moteur pour faire que le moteur développe un couple de sortie souhaité correspondant à un régime donné du moteur ;

b) on fait en sorte que le moteur passe du mode d'alimentation en carburant pauvre au mode d'alimentation en carburant riche, tout en maintenant le couple de sortie du moteur au couple de sortie souhaité correspondant au régime du moteur souhaité ;

**caractérisé par** les stades suivants :

on traite

i) la valeur de données pour une alimentation en carburant souhaitée du moteur provenant du traitement du stade a),

ii) une valeur de données pour le régime du moteur, et

iii) une valeur de données pour un rapport réel air-carburant, auquel le moteur fonctionne, pour développer ainsi une valeur de données pour une alimentation en carburant souhaitée du moteur, qui fait que le moteur fonctionne dans le mode d'alimentation en carburant riche, tout en maintenant le couple de sortie du moteur au couple de sortie souhaité correspondant au régime donné du moteur, lorsque le moteur fonctionnait dans le mode d'alimentation en carburant pauvre ; et

dans lequel le stade a) comprend :

alors que le moteur fonctionne dans le mode d'alimentation en carburant pauvre, on traite des valeurs de données du régime du moteur et de la position de la pédale de l'accélérateur pour développer une valeur de données pour une alimentation en carburant souhaitée du moteur, pour faire en sorte que le moteur développe un couple de sortie souhaité correspondant à un régime donné du moteur, et

dans lequel le stade b) comprend :

alors que le moteur fonctionne dans le mode d'alimentation en carburant riche, on traite une valeur de données pour un rapport réel air-carburant par une fonction qui met des valeurs de données du rapport air-carburant en corrélation avec des valeurs de données de l'alimentation en carburant du moteur, pour faire que le moteur fonctionne dans le mode d'alimentation en carburant riche, tout en maintenant un couple de sortie du moteur au couple de sortie souhaité correspondant au régime donné du moteur lorsque le moteur fonctionnait dans le mode d'alimentation en carburant pauvre, et on fait en sorte que la valeur de données de l'alimentation en carburant souhaitée soit la valeur de données de l'alimentation en carburant du moteur corrélée par la fonction à la valeur de données du rapport réel air-carburant.

2.   Moteur à combustion interne pour effectuer le procédé suivant la revendication 1, comprenant :

un système d'alimentation en carburant pour alimenter le moteur (20) en carburant suivant une valeur de données pour l'alimentation en carburant souhaitée du moteur ; et
un système (22) de commande pour traiter diverses données, afin de développer la commande de diverses fonctions du moteur, y compris des valeurs de données pour une alimentation en carburant souhaitée du moteur, le système (22) de commande comprenant une stratégie de commande ;

a) pour faire que le moteur fonctionne dans un mode d'alimentation en carburant pauvre et, alors que le moteur fonctionne dans le mode d'alimentation en carburant pauvre, pour traiter des valeurs de données de certains paramètres pour développer une valeur de données pour une alimentation en carburant souhaitée du moteur, pour faire que le moteur (20) développe un couple de sortie souhaité correspondant à un régime donné du moteur ; et
b) pour faire que le moteur (20) passe du mode d'alimentation en carburant pauvre à un mode d'alimentation en carburant riche, tout en maintenant un couple de sortie du moteur au couple de sortie souhaité correspondant au régime donné du moteur en traitant i) la valeur de données pour une alimentation en carburant souhaitée du moteur provenant du traitement de a), ii) une valeur de données pour un régime du moteur et iii) une valeur de données pour un rapport réel air-carburant, auquel le moteur (20) fonctionne, afin de développer une valeur de données pour une alimentation en carburant souhaitée du moteur, qui fait que le moteur (20) fonctionne dans le mode d'alimentation en carburant riche, tout en maintenant un couple de sortie du moteur au couple de sortie souhaité correspondant au régime donné du moteur, lorsque le moteur (20) fonctionnait dans le mode d'alimentation en carburant pauvre.

Figure 1

Figure 8

Figure 9

Figure 2

Figure 3

Figure 4

Figure 5

*130*

SPEED (N) → | grid | → Torque_des
APS → N / APS

*132*

SPEED (N) → | grid | → VF_des_m_c
TQ_des → N / TQ_des

*134*

SPEED (N) → | grid | → VF_des_m_r
TQ_des → N / TQ_des

## Figure 6

AFR ↓

*100*

AFR<=AFR_c

No → main fueling interpolation between lean and critical conditions  *102*

Yes ↓

main fueling interpolation between rich and critical conditions  *104*

## Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10026806
- JP 2000027710 A
- JP 11351020 A
- JP 63105256 A
- US 20030110760 A1
- US 20020189580 A1